Europäisches Patentamt

European Patent Office

Office européen des brevets

(19)

(11) **EP 1 335 317 A2**

(12) **EUROPÄISCHE PATENTANMELDUNG**

(43) Veröffentlichungstag:
   **13.08.2003  Patentblatt 2003/33**

(51) Int Cl.⁷: **G06K 11/08**, G06K 11/18,
   G06F 3/033

(21) Anmeldenummer: **03000774.4**

(22) Anmeldetag: **14.01.2003**

(84) Benannte Vertragsstaaten:
   **AT BE BG CH CY CZ DE DK EE ES FI FR GB GR
   HU IE IT LI LU MC NL PT SE SI SK TR**
   Benannte Erstreckungsstaaten:
   **AL LT LV MK RO**

(30) Priorität: **31.01.2002  DE 10203992**

(71) Anmelder: **Deutsches Zentrum für Luft- und
   Raumfahrt e.V.
   51147 Köln (DE)**

(72) Erfinder:
   • **Arbter, Klaus, Dr.
     82290 Landsberied (DE)**
   • **Heindl, Johann, Dipl.-Ing.
     82229 Seefeld (DE)**

(74) Vertreter: **von Kirschbaum, Albrecht, Dipl.-Ing.
   Patentanwalt,
   Postfach 15 20
   82102 Germering (DE)**

(54) **Eingabeeinrichtung**

(57)   Zum Steuern der räumlichen Lage eines in einer virtuellen Realität auf einer Darstellungseinrichtung (3) einer Graphikeinheit (16) graphisch darzustellenden Objekts (1) ist ein Eingabemedium einer Mensch-Maschine-Schnittstelle vorgesehen, das durch die Hand (5) einer Bedienungsperson in sechs Freiheitsgraden verschiebbar und verdrehbar ist und das durch ein mit einer Hand der Bedienperson leicht greifbares, materielles und mit Markierungen (9) versehenes Modellobjekt (6) des darzustellenden Objekts (1) gebildet ist.

   Die Markierungen (9) sind aktive Leuchtmarkierungen, die in mindestens einer Kamera zugewandten Unterseite des Modellobjekts (6) so integriert sind, dass auf Grund von geometrischer Anordnung und/oder Einstellung der Strahlungsintensität der Leuchtmarkierungen sowohl die Orientierung als auch die Kennung des darzustellenden Objekts kodierbar ist.

Fig.1

EP 1 335 317 A2

**Beschreibung**

Die Erfindung betrifft eine Eingabeeinrichtung zum Durchführen eines aus EP 1 047 014 A2 bekannten Verfahrens.

Die Beeinflussung der räumlichen Lage von Objekten durch den Menschen ist in vielen Bereichen der Technik von Bedeutung. Allerdings fällt es dem Menschen sehr schwer, gleichzeitig in mehreren Freiheitsgraden zu steuern. Als Beispiel sei hier ein gleichzeitiges Steuern eines Baggers in mehreren Freiheitsgraden angeführt. Anderseits besteht hierfür ein dringender Bedarf, insbesondere in der Computergrafik. Hier möchte der Nutzer simulierte Objekte aus einer beliebigen Ansicht auf dem Monitor betrachten können. Darüber hinaus möchte er auch die simulierte Betrachterposition und -orientierung auf einfache Weise verändern können. Im äußersten Fall bedeutet dies, dass gleichzeitig drei translatorische und drei rotatorische Freiheitsgrade zu steuern sind.

Um den Menschen hierzu zu befähigen, benötigt er eine bedienerfreundliche Mensch-Computer-Schnittstelle. Über diese können komplexe Verhaltensmuster des Menschen in Steuersignale für den Computer zerlegt werden. Dazu eignet sich prinzipiell jedes System, welches die Lage und Orientierung der menschlichen Hand in und um alle drei Raumrichtungen messtechnisch erfassen kann.

Darüber hinaus ist es für viele Anwendungen wünschenswert, dass die Bewegung der Hand durch nichts, und zwar weder durch mechanische Teile noch durch Kabel, eingeengt wird, und die Benutzung möglichst intuitiv erfolgt. Dies gilt insbesondere in der Werbebranche.

Als ein einsichtiges Beispiel sei die Idee eines "virtuellen Autosalons" skizziert. Sämtliche Autotypen sind hier in unterschiedlichen Ausführungen als Computer-Grafiken gespeichert und können auf einem Monitor oder einer Projektionsleinwand dargestellt werden. Dazu muß es aber jedem - ob Verkäufer, Vorstand oder Kunde - auf Anhieb, d. h. ohne jegliche Übung, gelingen, die gewünschte Ansicht einzustellen und zu verändern.

In EP 1 047 014 A2 sind optoelektronische Trackingsysteme beschrieben, bei welchen sich unterhalb einer durchsichtigen, horizontalen Platte (Fenster) eine oder mehrere Kameras befinden. Als Eingabemedium dient ein leicht greifbares Modellobjekt, beispielsweise ein kleines Modellauto, in der Hand eines Bedieners.

Das Modellobjekt ist auf der der Kamera zugewandten Unterseite mit einem oder mehreren ebenen Symbolen, wie beispielsweise Buchstaben, Zahlen, abstrakten Symbolen, geometrischen Symbolen und Codes versehen. Zur Vereinfachung werden im folgenden alle Symbole, unabhängig davon, ob sie zur Identifizierung, zur Lagebestimmung oder gleichzeitig zu beiden Zwecken dienen, als "Markierung" bezeichnet.

Die Kamerabilder dieser Markierungen werden mit Methoden der Bildverarbeitung ausgewertet. Das Ergebnis dieser Auswertung ist sowohl eine Kennung des Objektes sowie seine räumliche Lage. Auf diese Weise können mehrere, gleichzeitig im Bild erscheinende Objekte unterschieden und ihre individuellen Lagen angegeben werden.

Die Ergebnisse werden an eine Grafik-Workstation übertragen, auf welcher die zugeordneten Objekte, beispielsweise ein, zwei, oder mehrere Autos unterschiedlicher Fabrikate in den vom Bediener vorgegebenen Lagen dargestellt werden. Um eine einfache, schnelle und sichere Segmentierung der Markierungen im Kamerabild zu gewährleisten, sind die Markierungen entweder aus retroreflektierendem Material und direkt beleuchtet, oder aus streuendem, farbigem Material hergestellt und indirekt beleuchtet.

Durch den unmittelbaren räumlichen Bezug zwischen dem als Eingabemedium dienenden, materiellen Modell und dem simulierten Modell (Grafik) assoziiert der Benutzer sofort die richtige Verwendung des Systems, und kann es, ohne vorher zu üben, bedienen. Die Beweglichkeit der Hand des Nutzers wird weder durch mechanische Komponenten noch durch elektrische Leitungen behindert. Eine Realisierung ist mit herkömmlichen Komponenten, wie PC's, Framegrabber, Videokameras u.ä. kostengünstig möglich. Systeme dieser Art wurden bereits in der Autoindustrie erfolgreich erprobt.

Die in EP 1 047 014 A2 beschriebenen Ausführungen mit retroreflektierenden oder diffus streuenden farbigen Markierungen haben jedoch verschiedene Nachteile:

- Die Verwendung von retroreflektierenden Markierungen erfordert eine Beleuchtungseinrichtung, welche in der Nähe der Kamera angeordnet ist, weil sonst der retroreflektierende Effekt nicht erzielt wird. Durch die senkrechte Anordnung zum Fenster entstehen intensive Reflexe an der Fensteroberfläche, die eine Bildauswertung in der gestörten Bildregion unmöglich machen. Eine Entspiegelung, wie sie von Massenware, wie entspiegelten Fenstern oder Bilderrahmen, bekannt ist, reicht für eine ausreichende Dämpfung dieser Reflexe nicht aus. Qualitativ hochwertige Entspiegelungen sind sehr teuer.

- Spiegelreflexe können zwar durch indirekte Beleuchtung vermieden werden, jedoch muß für die Markierungen ein Material verwendet werden, welches Licht streut. Der Kontrast von gestreutem Licht ist jedoch sehr viel geringer als derjenige von reflektiertem Licht und reicht in der Regel für eine sichere Segmentierung nicht aus. Eine Verbesserung ist durch farbige Markierungen erreicht, weil das gestreute Licht von farbigen Markierungen schon mit einem handelsüblichen PC sehr schnell und sicher segmentiert werden kann.

Allerdings ist dazu die Beleuchtung mit einem breitbandigen Lichtspektrum, in der Regel weissem Licht, erforderlich. Das durch das Fenster austretende Streulicht der indirekten Beleuchtung stört jedoch den Betrachter der Computergrafik und wirkt sich nachteilig auf die Brillanz der Grafik aus. Ferner können bei indirekter Beleuchtung mit streifendem Licht die Markierungen nur in einer Ebene angeordnet werden, weil andernfalls keine gleichmäßige Beleuchtung der Markierungen erzielt wird.

- Mit nur in einer Ebene angeordneten Markierungen und mit nur einer Kamera sind nur die Bewegungsfreiheitsgrade Translation in drei orthogonalen Raumrichtungen und Rotation um die Hochachse, (Normale auf die Fensterebene) zuverlässig bestimmbar. Die Bestimmung einer Kipplage ist sehr empfindlich gegenüber Abbildungsfehler, wie beispielsweise die örtliche Quantisierung aufgrund der Pixelstruktur des Sensors (Bildspeichers), und zwar aufgrund der Tatsache, dass Kippwinkeländerungen um die Nominallage nur Längenänderungen 2. Ordnung, d.h. kleine Längenänderungen, im Bild zur Folge haben, und daher kleine Bildfehler zu großen Schätzfehlern für die Kippwinkel führen. Eine deutliche Verbesserung wird mit zwei oder mehr Kameras bei schräger Blickrichtung erhalten, wie bereits in EP 1 047 014 A2 erwähnt ist.

Der Erfindung liegt die Aufgabe zugrunde, zur Durchführung des aus EP 1 047 014 A2 bekannten Verfahrens eine reflexfreie und auch gegen Umgebungslicht weitgehend störungsfreie Eingabeeinrichtung zu schaffen und gegebenenfalls so auszugestalten, dass mit ihr auch kleine Kippwinkel einwandfrei erfasst werden können.

Diese Aufgabe ist bei einer Eingabeeinrichtung zum Durchführen des bekannten Verfahrens durch die Merkmale im kennzeichnenden Teil des Anspruchs 1 erreicht. Vorteilhafte Weiterbildungen der Erfindung sind Gegenstand der auf den Anspruch 1 unmittelbar oder mittelbar rückbezogenen Ansprüche.

Gemäß der Erfindung die sich auf eine Eingabeeinrichtung zum Durchführen des bekannten Verfahrens bezieht, ist diese Aufgabe dadurch gelöst, dass die an der kamerazugewandten Unterseite eines Modellobjekts vorgesehenen Markierungen aktive Leuchtmarkierungen sind, die so in die Modellobjekt-Unterseite integriert sind, dass aufgrund von geometrischer Anordnung und Einstellung der Strahlungsintensität durch die Leuchtmarkierungen sowohl die Orientierung als auch die Kennung eines darzustellenden Objekts codierbar ist. Als aktive Leuchtmarkierungen eignen sich vorzugsweise schmalbandig lichtemittierende Elemente, beispielsweise lichtemittierende Dioden, sogenannte LEDs.

Bei der erfindungsgemäßen Eingabeeinrichtung ist besonders vorteilhaft, dass eine diese Eingabeeinrichtung benutzende Person beim Betrachten eines auf einer Darstellungseinrichtung wiedergegebenen Objektes weder durch eine Beleuchtungseinrichtung noch durch von einer solchen Beleuchtungseinrichtung ausgehende Reflexe gestört wird. Da die Leuchtmarkierungen vorzugsweise in Form von lichtemittierenden Elementen an der Unterseite des mit einer Hand von der Bedienungsperson gehaltenen und bewegten Modellobjekts angeordnet sind, wird die Bedienungsperson durch diese Lichtabgabe in keiner Weise gestört. Noch dazu sind die Lichtstrahlen so ausgerichtet, dass sie von der Unterseite des Modellobjekts nach unten auf die darunter angeordnete Kamera ausgerichtet sind.

Durch unterschiedliche geometrische Anordnungen sowie durch unterschiedliche Einstellungen der Strahlungsintensität der aktiven Leuchtmarkierungen kann sowohl die Orientierung (vorne/hinten) als auch die Objekterkennung entsprechend codiert werden.

Da es lichtemittierende Elemente, wie LEDs in unterschiedlichen Farben, nämlich blau, grün, gelb, orange, rot und nahes infrarot gibt, kann auch durch Auswählen einer entsprechenden Farbe und eines dem Kameraobjektiv vorgeschalteten Filters eine hohe Störsicherheit gegenüber direkt einfallendem Umgebungslicht erzielt werden. So ist beispielsweise bei einer Raumbeleuchtung mittels Leuchtstoffröhren die Verwendung von schmalbandigen Infrarot-LEDs vorteilhaft, während bei einer Raumbeleuchtung mittels Glühlampen vorzugsweise kurzwelliges Licht, wie blaues oder grünes Licht oder unsichtbare UV-Strahlung eingesetzt werden.

Die Tatsache, dass aktive Leuchtmarkierungen, wie beispielsweise LEDs mit Energie versorgt werden müssen, ist von ausgesprochen untergeordneter Bedeutung. Da insbesondere LEDs nur einen sehr geringen Energiebedarf haben, kann der Energiebedarf mittels einer in dem Modellobjekt untergebrachten Batterie oder einem dort untergebrachten Akkumulator in zufriedenstellender Weise gedeckt werden. Beispielsweise reicht eine handelsübliche Batterie von 4,5V und ca. 6000mAh bei einer Stromentnahme von 5mA für einen Dauerbetrieb von 1200 Stunden aus. Bei Verwenden einer drahtgebundenen Ladevorrichtung oder einer induktiv wirkenden Ladevorrichtung, wie sie beispielsweise zum Laden von in elektrischen Zahnbürsten vorgesehenen Akkumulatoren bekannt ist, können also sehr viel kleinere und somit weniger Platz als Batterien beanspruchende Akkumulatoren eingesetzt werden.

Zum korrekten Erfassen eines Kippwinkels eines in der Hand einer Bedienperson gehaltenen Modellobjekts können gemäß einer vorteilhaften Weiterbildung der Erfindung die Leuchtmarkierungen im Modellobjekt in unterschiedlichen Ebenen angeordnet werden. So können vorzugsweise mindestens zwei Leuchtmarkierungen in einer durch die Modellobjekt-Unterseite gebildeten Ebene vorgesehen sein, während eine weitere Leuchtmarkierung in einer dazu parallelen, im Modellobjekt liegenden Ebene angeordnet ist. In vorteilhafter Weise kann eine weitere Leuchtmarkierung beispielsweise etwa in der Spitze einer von der Unterseite des Modellobjekts aus in dessen Innere hineinragende kegelförmige Vertiefung angeordnet sein.

Bei einer Anordnung der Markierungen in unterschiedlichen Ebenen ist somit eine dreidimensionale Markierungsstruktur geschaffen. Bei Kippbewegungen um die Nominallage ändert sich somit die Auslenkung des Bildes der in der bezogen auf die Kamera weiter entfernt, beispielsweise im Modellobjekt angeordneten Markierung sinusförmig mit dem Kippwinkel, d.h. für kleine Winkel näherungsweise proportional, da es sich um eine Änderung erster Ordnung handelt. Die Richtung, in welcher dann die Auslenkung erfolgt, gibt die Kipprichtung an.

Der besondere Vorteil bei einer derartigen dreidimensionalen Markierungsstruktur liegt darüber hinaus darin, dass die unterschiedlichen Kippwinkel mit nur einer Kamera erfasst werden können. Bei Verwenden von vorzugsweise mindestens zwei Stereokameras wird das Erfassen der Kippwinkel noch erheblich effizienter und die Qualität der Ergebnisse gegenüber der Anordnung von Markierungen in nur einer Ebene ist deutlich verbessert.

Bekanntlich können durch feststehende Gegenstände im Erfassungsbereich einer Kamera stationäre Bildstrukturen entstehen, insbesondere aber durch eine im allgemeinen stationäre Raumbeleuchtung. Derartige Bildstrukturen können effizient dadurch unterdrückt werden, dass Differenzen D von zeitlich im Abstand von j aufeinanderfolgenden Bilder G gebildet werden, nämlich

$$D_k(x, y) = G_k(x, y) - G_{k-j}(x, y)$$

Anschließend wird dann eine Schwellenwertbildung $S(D_i(x, y))$ durchgeführt. Eine derartige Maßnahme bedeutet keine Einschränkung hinsichtlich der Lagebestimmung eines Objektes. Befindet sich nämlich das Objekt in Ruhe, werden seine Markierungen von der stationären Kamera nicht gesehen, aber es ändern sich auch die Lageparameter nicht. Erst wenn das Modellobjekt bewegt wird, erscheinen seine Markierungen sichtbar im Differenzbild und zwar die Markierungen in der neuen Position mit (hohen) positiven Grauwerten und die Markierungen in der alten Position mit (hohen) negativen Grauwerten. Durch die Wahl eines geeigneten positiven Schwellenwertes werden nur die Markierungen in der neuen Position dargestellt und kleinere, beispielsweise durch ein Kamerarauschen hervorgerufene Störungen werden unterdrückt.

Bei geringen Bewegungen können sich die Bilder der Markierungen in der alten und der neuen Position überlappen und damit eine scheinbare Verschiebung der Mittelpunkte bewirken. Um diesen Einfluss zu vermeiden, wird das Differenzbild nur zur Segmentierung und Festlegung von eng begrenzten Regionen (ROI Region of Interest) benutzt, in welchen die vollständigen Bilder der Markierungen in der neuen Position erwartet werden. Der abschließende Messvorgang wird dann in den ROIs des neuen Grauwertbildes ($G_i(x, y)$) durchgeführt, in welchen die Bilder der Markierungen vollständig enthalten sind.

Nachstehend werden bevorzugte Ausführungsformen der Erfindung anhand der Zeichnungen erläutert. Es zeigen:

Fig.1 eine schematische Darstellung einer Eingabeeinrichtung zur Durchführung des bekannten Verfahrens;

Fig.2 zwei abstrahierte Beispiele mit unterschiedlicher Anordnung von Markierungspunkten in Seitenansicht für eine nachfolgende Fehlerbetrachtung, und

Fig.3 weitere Beispiele für verschiedene Ausführungen bzw. Anordnungen von Markierungen in Draufsicht von unten in stark vergrößerter Wiedergabe.

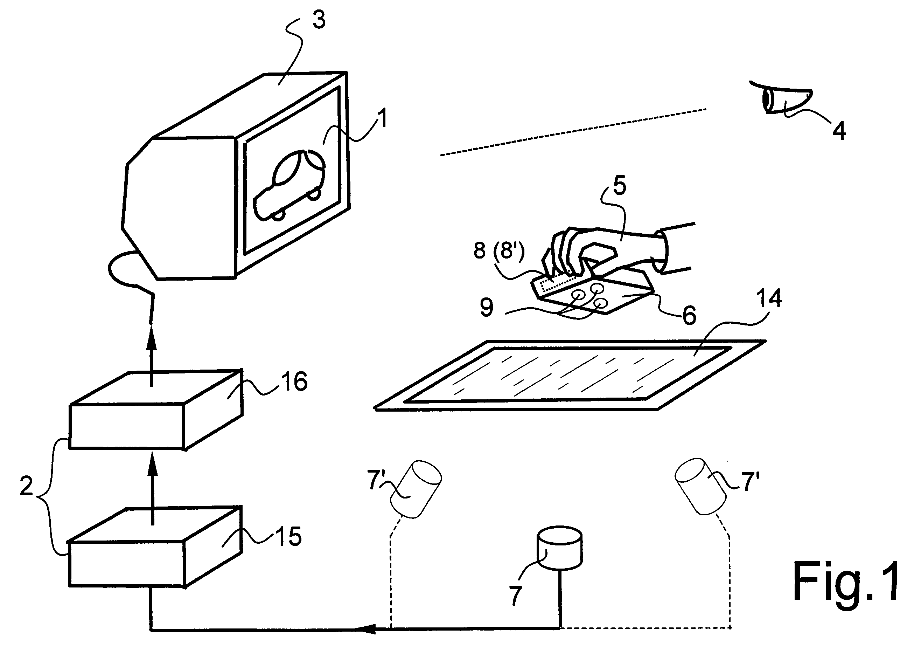

Mit der in Fig.1 dargestellten Einrichtung lässt sich in einer virtuellen Realität die Lage eines Objekts 1 auf einer über einen Computer 2 angesteuerten graphischen Darstellungseinrichtung 3 einfach einstellen. Das Auge 4 eines Benutzers betrachtet das virtuell dargestellte Objekt 1 auf der Darstellungseinrichtung 3. In einer Hand 5 hält der Benutzer ein physikalisches Modellobjekt 6 in einer gewünschten Lage und Orientierung.

Das Modellobjekt 6 ist ein tragbarer, leicht greifbarer Gegenstand, beispielsweise wie in Fig.1 ein Klotz oder aber ein gegenständliches Modell des virtuell darzustellenden Objekts 1. Das von einer elektronischen Kamera 7 beobachtete Modellobjekt 6 weist auf seiner Unterseite Markierungen 9 auf, welche so angeordnet sind, dass sie sich zum einen zur Bestimmung der räumlichen Objektlage aus dem Kamerabild und sich zum anderen auch zur Unterscheidung verschiedener darzustellender Objekte 1, also zur Identifizierung eignet. Zwischen der elektronischen Kamera 7 und dem Modellobjekt 6 ist schematisch eine optisch durchlässige Scheibe 14 wiedergegeben.

Anstelle der Kamera 7 können auch vorzugsweise zwei Stereokameras 7' sowohl in paralleler Ausrichtung ihrer optischen Achsen oder aber auch, wie in Fig.1 angedeutet, in vorteilhafter Weise mit gegeneinander geneigten Orientierungen vorgesehen sein.

Wie bereits in EP 1 047 014 ausgeführt, kann auf die optisch durchlässige Scheibe 14 das physikalische Modellobjekt 6 im Erfassungsbereich der elektronischen Kamera 7 angelegt werden, so dass es auf der Oberfläche der Scheibe 14 mit der Hand 5 des Benutzers in denjenigen Fällen bequem geführt werden kann, in denen nur die drei Freiheitsgrade der Bewegung auf der Scheibe gesteuert werden sollen, d.h. eine Verschiebung auf der Scheibe 14 und ein Verdrehen um eine auf der Scheibenebene senkrecht stehende Hochachse.

Der Computer 2, der in Fig.1 wiedergegebenen Einrichtung zur Darstellung eines Objekts 1 in einer virtuellen Realität in gewünschter Lage weist eine Einrichtung 15 zur Bildverarbeitung und eine Computer-Graphikeinrichtung 16 auf. Hierbei enthält die Einrichtung 15 zur Bildverarbeitung Mittel zur Aufnahme der Bilder, Segmentierungsmittel zur Trennung des Bildes des Markierungssymbols 9 von allen übrigen Bildteilen, Mittel zur Objektidentifizierung zur Berechnung auf die räumliche Objektlage aus dem Kamerabild der Markierungen 9. Die Computer-Graphikeinheit 16 enthält Mittel zur Speicherung virtueller 3D-Objekte und Mittel zur Berechnung der Ansichten virtuell darzustellender Objekte 1 in Abhängigkeit von der jeweiligen Betrachterposition.

In der über den Computer 2 angesteuerten Darstellungseinrichtung 3 erfolgt dann eine Darstellung des virtuell abzubildenden Objekts 1 entsprechend der Ansicht, die durch den Benutzer unter Verwendung des physikalischen Modellobjekts 6 vorgegeben wird.

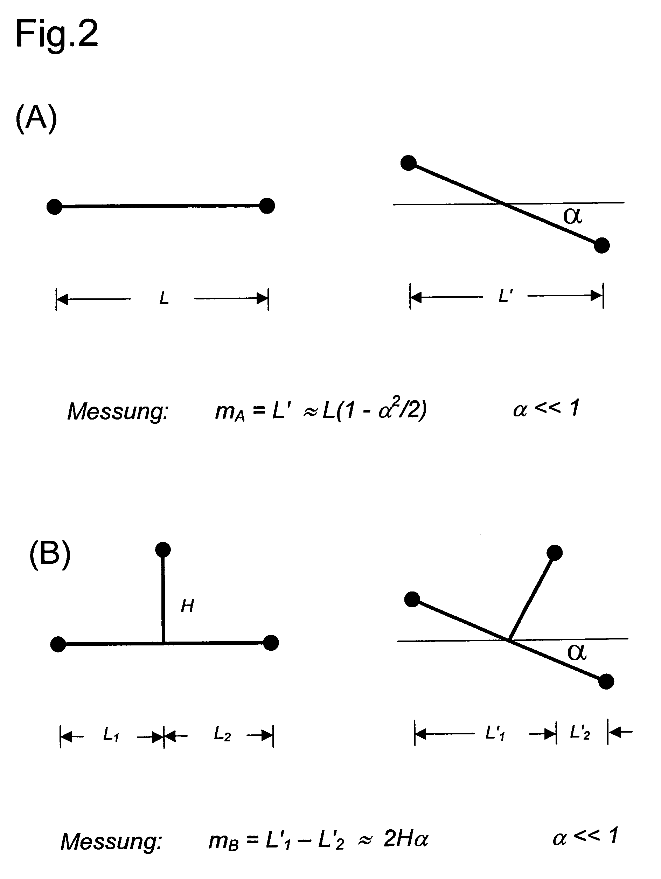

Der Vorteil einer räumlichen Anordnung der Markierungspunkte anstelle einer Anordnung nur in einer Ebene wird an einem abstrahierten Beispiel dargestellt. In Fig.2 sind vereinfachte Seitenansichten zweier Anordnungen (A) und (B) zur Bestimmung eines Kippwinkels α gezeigt, nämlich eine Anordnung (A) mit zwei Markierungspunkten und eine Anordnung (B) mit drei nicht kolinearen in der Zeichenebene liegenden Punkten.

Die beiden Anordnungen (A) und (B) werden nunmehr ausschließlich unter dem Gesichtspunkt der Kippwinkelerfassung einander gegenübergestellt. Die Anordnung (A) weist zwei Markierungen in Form von zwei Bildpunkten auf, welche in der Nominallage horizontal angeordnet sind. Bei der Anordnung (B) ist eine zusätzliche punktförmige Markierung im Abstand H von der Verbindungslinie zwischen den beiden anderen punktförmigen Markierungen vorgesehen.

In beiden Fällen soll der unbekannte Kippwinkel α aus Längenmessungen bestimmt werden. Hierbei werden bewusst jeweils nur kleine Winkel betrachtet und nur dieser eine Bewegungsfreiheitsgrad angenommen. Hierbei erweist sich die erste Anordnung als unbrauchbar, während die zweite Anordnung eine Möglichkeit zeigt, dass selbst mit nur einer Kamera Kippwinkel erfasst werden können, wie nachstehend im einzelnen ausgeführt wird. Bei Einsetzen von zwei optischen Kameras ist sogar eine präzise Kippwinkel-Bestimmung einschließlich zusätzlicher Freiheitsgrade möglich, weil das Meßsystem einer solchen Anordnung zusätzlich Entfernungsinformationen liefert.

Bei der Anordnung (A) sind zur Bestimmung des Kippwinkels α lediglich zwei punktförmige Markierungen herangezogen. In der Umgebung der Horizontallage hängt hierbei die Messung näherungsweise quadratisch von dem unbekannten Kippwinkel α in nachstehend wiedergegebener Weise ab.

$$m_A = L' = (1 - \frac{\alpha^2}{2})$$

Für eine Schätzung α und den Schätzfehler Δα gilt daher:

$$\alpha = \pm \sqrt{2(L'-L)/L} \; ; \qquad \Delta\alpha = \frac{1}{(\alpha L)} \Delta L' \; ;$$

Die Schätzung hat jedoch nur eine reelle Lösung, wenn $L' \geq L$ ist. Obendrein ist die Schätzung doppeldeutig, d.h. die Kipprichtung ist undefiniert. Darüber hinaus ist die Fehlerempfindlichkeit umgekehrt proportional zu α und in der horizontalen Lage unendlich. Dies bedeutet, dass die Anordnung (A) für die Praxis unbrauchbar ist.

Bei der Anordnung (B) wird der Kippwinkel α mit Hilfe von drei nicht kolinearen, punktförmigen Markierungen bestimmt. Die Messung hängt in der Umgebung der Horizontallage näherungsweise linear von dem unbekannten Kippwinkel α ab.

$$m_B = L'_1 - L'_2 = 2H\alpha$$

Für die Schätzung und den Schätzfehler gilt daher:

$$\alpha = (L'_1 - L'_2)/2H \; ; \qquad \Delta\alpha \leq |\Delta L'_1 /2H| + |\Delta L'_2 /2H|;$$

Die Schätzung ist eindeutig bezüglich der Kipprichtung. Die Fehlerempfindlichkeit ist proportional zu 1/H und unabhängig von der Basislänge L.

Nachstehend wird ein Beispiel anhand von realistischen Werten gegeben mit
H=20mm und einer Kameraauflösung = 430mm/512Pixel≈ 1mm/Pixel ⟹ $|\Delta L'_1| = |\Delta L'_2| = 1$mm

Somit ergibt sich für Δα

$$\Delta\alpha = 2mm/40mm = 0,05rad \approx 3°$$

Bei dieser Fehlerbetrachtung ist das Verbesserungspotential, welches üblicherweise bei einem Faktor 2 bis 5 liegt, durch subpixelgenaue Bildauswertung nicht berücksichtigt.

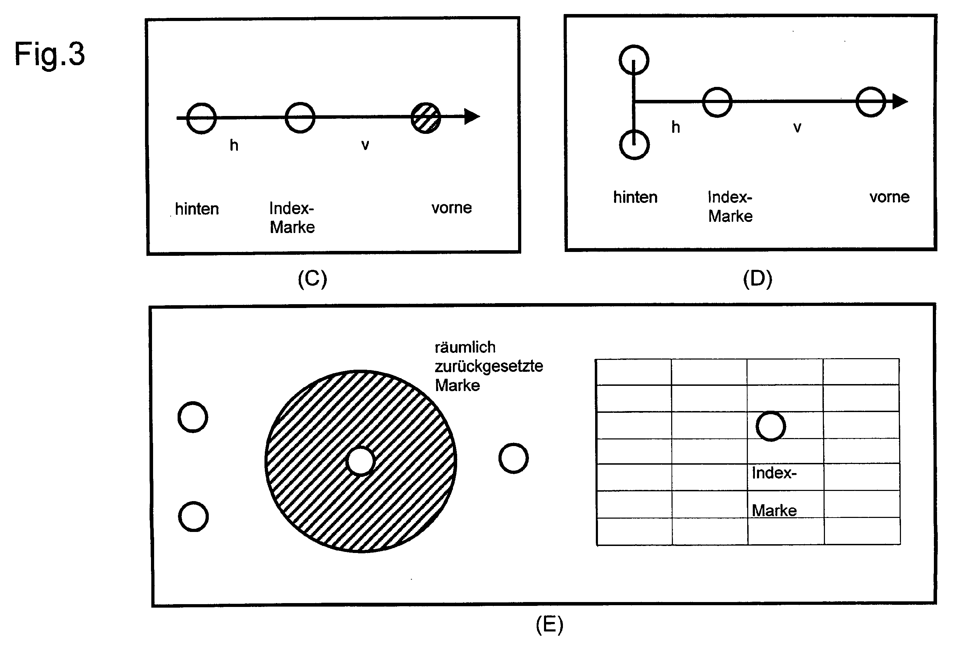

In Fig.3 sind Beispiele für verschiedene Anordnungen von Markierungen in Draufsicht (von unten) zum Teil stark vergrößert wiedergegeben. Bei der Anordnung (C)reichen die vordere Markierung v und die hintere Markierung h zur Bestimmung der Bewegungsfreiheitsgrade, Translation in der Horizontalebene und Rotation um die Vertikalachse aus. Die Orientierung "vorne bzw. v" und "hinten bzw. h" ist bei der Anordnung (C) durch unterschiedliche Helligkeit markiert, was durch die Schraffur in der rechten Markierung (vorne) angedeutet ist. Eine dritte - zwischen den Markierungen h und v, jedoch näher bei der Markierung h vorgesehene, als Indexmarke bezeichnete - Markierung kann zur Indizierung eines Objekts dienen. Mit $Index=round(N*h/(h+v))$ wird eine ganze Zahl zwischen 0 und N erhalten, welche als Kennung für dieses Objekt dient.

Bei der Anordnung (D) kann anstelle der Markierung mit unterschiedlicher Helligkeit durch Hinzunehmen einer weiteren Markierung im hinteren Bereich die Orientierung nach "vorne" und "hinten" eindeutig bestimmt werden. Im übrigen gilt dasselbe wie vorstehend bezüglich der Anordnung (C) ausgeführt.

Bei der Anordnung (E) ist stark vergrößert in einem durch einen schraffierten Kreis gekennzeichneten, offenen Kegel oder Zylinder eine weitere als zurückgesetzte Marke bezeichnete Markierung vorgesehen. Durch diese zurückgesetzte Markierung wird die Kipplagenbestimmung entscheidend unterstützt und verbessert. Die als Indexmarke bezeichnete Markierung befindet sich in einem gedachten, durch waagrecht und senkrecht dazu angeordnete Linien gebildetem Gitterfeld. Die Position der als Indexmarke bezeichneten Markierung in diesem Gitterfeld bezeichnet das Objekt (Index).

**Patentansprüche**

1. Eingabeeinrichtung zum Durchführen eines Verfahrens zum Steuern der räumlichen Lage eines in einer virtuellen Realität auf einer Darstellungseinrichtung (3) einer Graphikeinheit (16) graphisch darzustellenden Objekts (1) über ein Eingabemedium einer Mensch-Maschine-Schnittstelle, das durch die Hand (5) einer Bedienungsperson in sechs Freiheitsgraden verschiebbar und verdrehbar ist und das durch ein mit einer Hand der Bedienperson leicht greifbares, materielles und mit Markierungen (9) versehenes Modellobjekt (6) des darzustellenden Objekts (1) gebildet ist, wobei mit mindestens einer feststehenden elektronischen Kamera (7) die an einer kamerazugewandten Seite des Modellobjekts (6) vorgesehenen Markierungen (9) bildmäßig aufgenommen und mit Methoden der Bildverarbeitung rechnerisch dahingehend ausgewertet werden, dass die räumliche Lage des Objekts (1) das Auswertungsergebnis ist, das an die Graphikeinheit (16) übertragen wird, auf deren Darstellungseinrichtung (3) das zugeordnete Objekt in der vorgegebenen Lage des Objekts (1) als virtuelle Realität entsprechend dargestellt wird, **dadurch gekennzeichnet, dass** die Markierungen (9) aktive Leuchtmarkierungen sind, die in der kamerazugewandten Unterseite des Modellobjekts (6) so integriert sind, dass auf Grund von geometrischer Anordnung und/oder Einstellung der Strahlungsintensität der Leuchtmarkierungen sowohl die Orientierung als auch die Kennung des darzustellenden Objekts kodierbar ist.

2. Eingabeeinrichtung nach Anspruch 1, **dadurch gekennzeichnet, dass** die aktiven Leuchtmarkierungen (9) schmalbandig lichtemittierende Elemente (LEDs) sind.

3. Eingabeeinrichtung nach Anspruch 1, **gekennzeichnet durch** schmalbandige lichtemittierende Elemente (LEDs) unterschiedlicher Farben.

4. Eingabeeinrichtung nach einem der vorhergehenden Ansprüche, **dadurch gekennzeichnet, dass** zur Energieversorgung der Leuchtmarkierungen (9) in Form von schmalbandig lichtemittierenden Elementen (LEDs) in dem jeweiligen Modellobjekt (6) eine Batterie (8) oder ein Akkumulator (8') vorgesehen ist.

5. Eingabeeinrichtung nach einem der vorhergehenden Ansprüche, **dadurch gekennzeichnet, dass** hinsichtlich einer höheren Störsicherheit gegenüber Umgebungslicht die Farbe einer aktiven Leuchtmarkierung (9) und ein der Kamera (7) vorgeschaltetes, gegebenenfalls mehrstufiges Filter abgestimmt sind.

6. Eingabeeinrichtung nach einem der vorhergehenden Ansprüche, **dadurch gekennzeichnet, dass** zum korrekten Erfassen eines Kippwinkels eines Modellobjekts (6) die Leuchtmarkierungen (9) im Modellobjekt (6) in unterschiedlichen Ebenen angeordnet sind.

7. Eingabeeinrichtung nach Anspruch 6, **dadurch gekennzeichnet, dass** mindestens zwei Leuchtmarkierungen (9) etwa in einer die Modellunterseite bildenden Ebene und mindestens eine weitere Leuchtmarkierung in einer dazu parallelen, im Modellobjekt (6) liegenden Ebene angeordnet sind.

8. Eingabeeinrichtung nach Anspruch 6, **dadurch gekennzeichnet, dass** mindestens zwei Leuchtmarkierungen (9) in einer die Modellunterseite bildenden Ebene und mindestens eine weitere Markierung etwa in der Spitze einer von der Unterseite des Modellobjekts (6) aus in dessen Innere hineinragende zylindrische oder kegelförmige Vertiefung angeordnet sind.

Fig.1

EP 1 335 317 A2

# Fig.2

## (A)

$$\text{Messung:} \quad m_A = L' \approx L(1 - \alpha^2/2) \qquad \alpha << 1$$

## (B)

$$\text{Messung:} \quad m_B = L'_1 - L'_2 \approx 2H\alpha \qquad \alpha << 1$$

Fig.3

(C)

hinten    Index-    vorne
          Marke

h    v

(D)

hinten    Index-    vorne
          Marke

h    v

(E)

räumlich zurückgesetzte Marke

Index- Marke